# EUROPEAN PATENT SPECIFICATION

(11) **EP 1 968 140 B1**
(45) Date of publication and mention of the grant of the patent: **29.03.2017**
(21) Application number: 06842823.4
(22) Date of filing: 08.12.2006
(51) Int. Cl.: H01M 4/587, C04B 35/532, C04B 35/52, H01M 4/36, H01M 4/133, H01M 10/0525

(54) **PROCESS FOR PRODUCING NEGATIVE ELECTRODE MATERIAL FOR LITHIUM ION SECONDARY BATTERY**
VERFAHREN ZUR HERSTELLUNG VON NEGATIVEM ELEKTRODENMATERIAL FÜR EINE LITHIUM-ION-SEKUNDÄRBATTERIE
PROCESSUS DE FABRICATION D UN MATÉRIAU D ÉLECTRODE NÉGATIVE POUR PILE SECONDAIRE AU LITHIUM IONIQUE

(30) Priority: 28.12.2005 JP 2005377139
(43) Date of publication of application: 10.09.2008
(73) Proprietor: Tokai Carbon Company, Ltd., Minato-ku, Tokyo 107-8636 (JP)
(72) Inventor: DOHZONO, Mitsuaki, Tokyo 107-8636 (JP); YAMAMOTO, Masatake, Tokyo 107-8636 (JP); HIUGANO, Satoshi, Tokyo 107-8636 (JP); TAKIZAWA, Kentaro, Tokyo 107-8636 (JP)
(74) Representative: Flaccus, Rolf-Dieter
(86) International application number: PCT/JP2006/324992
(87) International publication number: WO 2007/074655

(56) References cited:
- EP-A- 0 861 804
- EP-A- 1 387 420
- EP-A2- 0 124 062
- WO-A-03/028128
- WO-A-03/064560
- GB-A- 1 320 444
- JP-A- 07 302 595
- JP-A- 11 284 061
- JP-A- 2000 086 343
- JP-A- 2001 316 105
- JP-A- 2003 297 357
- US-A- 5 525 276
- US-A- 5 906 900
- "JIS K2425-1983: Methods of testing Creosote Oil, Prepared tar and Tar Pitch", JAPANESE INDUSTRIAL STANDARD, JAPANESE STANDARDS ASSOCIATION, JP, no. JIS K2425-1983, 1 January 1983 (1983-01-01), pages 1-58, XP008177831,

## Description

### TECHNICAL FIELD

The present invention relates to a process of producing a negative electrode material for lithium-ion secondary batteries that has a small irreversible capacity and a large reversible capacity.

### BACKGROUND ART

A lithium-ion secondary battery has a reduced weight and a high energy density. Therefore, the lithium-ion secondary battery has been considered to be a promising portable instrument drive power supply, power storage battery, and the like, and has been extensively studied. A carbon material has been used as a negative electrode material for the lithium-ion secondary battery. In particular, a graphite material has a high charge/discharge efficiency due to high lithium ion insertion/extraction reversibility, has a high theoretical capacity of 372 mAh/g, and enables production of a high-voltage battery due to a potential almost equal to that of lithium during charging/discharging, for example.

A graphite material that is highly graphitized and has a highly developed hexagonal carbon structure has a large capacity, but has a large irreversible capacity since an electrolyte decomposition reaction is likely to occur.

Since graphite particles are bonded in the plane direction to a large extent as compared with the thickness direction, a flake-like particle shape with a large aspect ratio is necessarily obtained. When using such flake-like graphite particles as the negative electrode material for a lithium-ion secondary battery, the graphite particles tend to be oriented in parallel to the electrode surface.

In a lithium-ion secondary battery, lithium ions are inserted or extracted through the end faces of graphite particles. Therefore, if the graphite particles are oriented in parallel to the electrode surface, the contact area between the end face (lithium ion passage) of the graphite particles and an electrolyte decreases. As a result, the lithium ion insertion/extraction rate is limited during a rapid charging/discharging process, whereby the capacity decreases rapidly.

Since the graphite particles expand or contract by about 10% when insertion/extraction of lithium ions occurs during charging/discharging, the adhesion between the particles is subjected to stress during a repeated charging/discharging process so that the battery capacity tends to undergo cycle deterioration.

In order to solve the above-described problems, attempts have been made that combine a graphite material with a high degree of graphitization and a carbonaceous substance with a low degree of graphitization by improving the properties of a carbon material such as a graphite material. For example, a carbon material obtained by covering the surface of graphite particles with a high degree of graphitization by low-crystalline carbon with a low degree of graphitization has been proposed.

For example, JP-A-11-011918 discloses a negative electrode for lithium-ion secondary batteries which is obtained by adding an organic binder and a solvent to graphite particles, mixing the components to obtain a graphite paste, applying the graphite paste to a collector, and integrating the product, wherein the graphite particles are produced by mixing graphite with a binder, carbonizing the binder by firing the mixture in a non-oxidizing atmosphere, and grinding the resulting product.

JP-A-11-171519 discloses a process of producing a graphite powder suitable for lithium-ion secondary batteries, wherein a graphite precursor (formed product) having a bulk density of 1.6 g/cm³ or less that contains at least one component that volatilizes at 400 to 3200 °C is graphitized.

The surface-modified carbon material disclosed in JP-A-11-011918 is effective for suppressing a decrease in battery capacity and deterioration in cycle characteristics since decomposition of an electrolyte is suppressed due to the carbon on the surface. However, since graphite particles are strongly bonded and aggregate when pitch or the like is applied to graphite and carbonized, the graphite particles must be ground. Since an active graphite surface is exposed due to grinding, the irreversible capacity increases, for example. The carbon material disclosed in JP-A-11-171519 shows an improved grinding capability. However, since the specific surface area increases due to a component that volatilizes after thermal polymerization of pitch, it is difficult to control a cell reaction.

WO 03/064560 A discloses a process for the manufacture of coated carbonaceous particles, which can be used as anode material in rechargeable electrical storage cells, particularly in rechargeable lithium ion batteries.

The process comprises the following steps: providing particles of a carbonaceous material, providing a coating of a fusible, carbon residue forming material on to the surface of the particles; oxidizing and carbonizing the coated particles; and graphitizing the carbonized particles. As carbonaceous particles, a pulvurent carbonaceous material selected from pitches and graphites can be used. The carbon residue forming material may be selected from various polymeric materials, e. g. pitches. In addition, organic substances such as toluene, benzene, xylene, quinoline, tetrahydrofuran, tetrahydronaphthalene, naphthalene etc. may be used as a solvent for providing a solution of the carbon residue forming material.

### DISCLOSURE OF THE INVENTION

The present invention was conceived in order to solve the above-described problems relating to a negative electrode material for lithium-ion secondary batteries. An object of the present invention is to provide a process of producing a negative electrode material for lithium-ion secondary batteries that has a small irreversible capacity and a large reversible capacity by suppressing exposure of an active graphite surface due to grinding.

The above-mentioned object is achieved by a process as defined in claim 1, which relates to a process of producing a negative electrode material for lithium-ion secondary batteries using starting materials comprising graphite particles, pitch and a fusible organic substance. The process according to the present invention comprises
- melt-mixing graphite particles, pitch having a quinoline insoluble content of 0.3% or less by weight and a fixed carbon content of 50% or more by weight, whereby the quinoline insoluble content and the fixed carbon content are determined by the method according to JIS K2425-1983, and a fusible organic substance, said fusible organic substance being stearic acid, wherein the organic substance is melted during melt-mixing to reduce its viscosity;
- carbonizing the mixture by firing,
- graphitizing the carbonized product, and
- grinding the graphitized product.

In this process of producing a negative electrode material for lithium-ion secondary batteries, it is preferable that the graphite particles and the pitch be mixed in such a ratio that the amount of the pitch is 25 to 40 parts by weight based on 100 parts by weight of the graphite particles, and a formed product obtained by forming the mixture be carbonized by firing, graphitized, and ground.

According to the production process of the present invention, the amount of pitch can be reduced by adding an organic substance having specific properties when mixing the pitch (low-crystalline carbon precursor) with the graphite particles. Moreover, since the grinding capability is improved when grinding the mixture subjected to carbonization by firing and graphitization, an increase in irreversible capacity due to a graphite crystal surface exposed due to grinding can be suppressed.

### BEST MODE FOR CARRYING OUT THE INVENTION

In the present invention, natural graphite particles or artificial graphite particles may be used as the graphite particles. It is preferable that the graphite particles have an average particle diameter of 10 to 25 µm. If the average particle diameter of the graphite particles is less than 10 µm, it may be difficult to obtain an electrode with a high density due to a decrease in filling density.

Moreover, the irreversible capacity may increase due to an increase in specific surface area. If the average particle diameter of the graphite particles is more than 25 µm, a rapid charging/discharging process may become difficult due to an increase in the diffusion distance between lithium ions in the graphite particles.

As the pitch, fusible pitch having a quinoline insoluble content of 0.3% or less by weight and a fixed carbon content of 50% or more by weight is used. A quinoline insoluble component hinders graphitization when effecting carbonization by firing and graphitization, thereby decreasing the electrical capacity of the resulting negative electrode material. Therefore, the quinoline insoluble content of the pitch is limited to 0.3% or less by weight. The quinoline insoluble content is adjusted by removing a quinoline insoluble component by solvent extraction, centrifugation of the raw material tar, or the like.

The pitch used in the present invention has a fixed carbon content of 50% or more by weight. If the fixed carbon content is less than 50% by weight, a large number of pores may be formed when a volatile component volatilizes during carbonization by firing. As a result, the irreversible capacity of the resulting lithium-ion secondary battery may increase due to an increase in specific surface area.

The quinoline insoluble content and the fixed carbon content are measured by the following methods.

Quinoline insoluble content: JIS K 2425-1983 "Methods of determining quinoline insoluble content of tar pitch"

Fixed carbon content: JIS K 2425-1983 "Methods of determining fixed carbon content".

It is preferable to use fusible pitch having a softening point of 70°C or more. If the softening point of the pitch is less than 70°C, the fixed carbon content may decrease. As a result, the above-described problem may occur.

When mixing the graphite particles and the pitch, stearic acid is added as said fusible organic substance. Stearic acid is a substance that volatilizes by 50% or more when heated to 400°C in the air and has a residual carbon content of 3% or less when heated to 800°C in an inert atmosphere. The components are then melt-mixed.

When mixing the graphite particles and the pitch, the organic substance must be melted to have a reduced viscosity. Therefore, a fusible organic substance, stearic acid, is used as the organic substance. The subsequent carbonization process is performed by firing the mixture in a non-oxidizing atmosphere that does not contain oxygen (air). Oxygen around the firing target product is removed due to the gas pressure which occurs when the organic substance contained in the firing target product volatilizes, or the organic substance reacts with oxygen to decrease the oxygen concentration. Therefore, stearic acid is used, which is an organic substance that volatilizes by 50% or more when heated to 400°C in the air.

The graphite particles and the pitch are mixed so that the amount of the pitch is 25 to 40 parts by weight based on 100 parts by weight of the graphite particles. If the amount of the pitch is less than 25 parts by weight, it may be difficult to uniformly cover the surface of the graphite particles. If the amount of the pitch is more than 40 parts by weight, the graphite particles are strongly fusion-bonded, whereby the grinding capability may decrease. This may require a large amount of force when grinding the graphite particles to a desired grain size, whereby an active graphite surface may be exposed due to grinding. Moreover, the irreversible capacity may increase due to an increase in specific surface area.

Since the residual carbon in the fusible organic substance decreases the reversible capacity, it is desirable that the residual carbon content of the fusible organic substance be as low as possible. Therefore, stearic acid is used, which is an organic substance having a residual carbon content of 3% or less when heated to 800°C in an inert atmosphere.

It is preferable to add the fusible organic substance, stearic acid, in an amount of 3 to 10 parts by weight based on 100 parts by weight of the graphite particles. If the amount of stearic acid is less than 3 parts by weight, it may be difficult to uniformly mix the fusible organic substance. Moreover, the antioxidation effect during firing may become insufficient. If the amount of the fusible organic substance, stearic acid, is more than 10 parts by weight, a large number of pores may be formed when a volatile component volatilizes. As a result, the irreversible capacity increases due to an increase in specific surface area.

A mixture obtained by mixing the graphite particles, the pitch, and the fusible organic substance, stearic acid, in a given ratio is further mixed at 100 to 250°C so that the pitch and the fusible organic substance, stearic acid, are melted. The components are sufficiently mixed using an appropriate mixer such as a heating kneader. It is preferable to sufficiently mix the components so that the molten pitch infiltrates the graphite particles and covers the surface of the graphite particles.

In this case, the graphite particles, the pitch, and the fusible organic substance, stearic acid, may be mixed at the same time. Alternatively, stearic acid may be added after the molten pitch has uniformly covered the surface of the graphite particles, or the stearic acid may be added before adding the fusible pitch.

The molten mixture is carbonized by firing the mixture at 800°C or more in a non-oxidizing atmosphere, and is then graphitized by heating the mixture at 2500°C or more. The resulting product is ground using a grinder such as a vibrating ball mill, a jet grinder, a roller mill, or an impact grinder.

In this case, instead of directly subjecting the molten mixture to carbonization by firing, graphitization, and grinding, a formed product obtained by placing the mixture in an appropriate mold and thermocompression forming or extruding the mixture may be carbonized by firing, graphitized, and then ground in order to increase the grinding efficiency.

When directly subjecting the molten mixture to carbonization by firing and graphitization, the resulting product is ground using an appropriate grinder (e.g., vibrating ball mill, jet grinder, roller mill, or impact grinder), and sieved out using a classifier to adjust to the average particle diameter to 11 to 28 µm. When grinding a formed product, it is preferable to roughly grind the formed product using a hydraulic or a motor grinder in advance, and then grind the resulting product.

A negative electrode material for lithium-ion secondary batteries that has a small irreversible capacity and a large reversible capacity can thus be produced.

### EXAMPLES

The present invention is described in detail below by way of examples and comparative examples. Note that the following examples illustrate one embodiment of the present invention, and should not be construed as limiting the present invention.

### Example 1

A Werner mixer (capacity: 2 liters) was charged with 500 g natural graphite having an average particle diameter of 20.2 µm and 175 g of coal pitch having a quinoline insoluble content of 0.2% by weight and a fixed carbon content of 52% by weight. The components were mixed at 130°C for 20 minutes. After the addition 25 g of stearic acid that volatilized by 63% when heated to 400°C in the air and had a residual carbon content of 0.4% when heated to 800°C in an inert atmosphere as said fusible organic substance, the components were melt-mixed for 10 minutes.

After cooling the resulting mixture, the mixture was placed in a graphite crucible, and carbonized by firing the mixture at 1000°C in a nitrogen gas atmosphere. The resulting product was placed in a graphitization furnace, and graphitized at 2500°C. The graphitized product was ground using a cyclone sample mill "CSM-F1" (manufactured by Fujiwara Scientific Co., Ltd.), and sieved out using a screen with a pore size of 44 µm to adjust the average particle diameter to 20.9 µm.

### Example 2

The components were melt-mixed in the same manner as in Example 1, except for using coal tar having a quinoline insoluble content of 0.2% by weight and a fixed carbon content of 55% by weight. The mixture was carbonized by firing, graphitized, and sieved out to adjust the average particle diameter to 20.9 µm in the same manner as in Example 1.

### Example 3

The components were melt-mixed in the same manner as in Example 1, except for using coal tar having a quinoline insoluble content of 0.3% by weight and a fixed carbon content of 52% by weight. The mixture was carbonized by firing, graphitized, and sieved out to adjust the average particle diameter to 20.4 µm in the same manner as in Example 1.

### Comparative Example 1

The components were melt-mixed in the same manner as in Example 1, except that no fusible organic substance (stearic acid) was used. The mixture was carbonized by firing, graphitized, and sieved out to adjust the average particle diameter to 21.3 µm in the same manner as in Example 1.

### Comparative Example 2

The components were melt-mixed in the same manner as in Example 1, except that coal tar having a quinoline insoluble content of 10% by weight and a fixed carbon content of 55% by weight was used and that no fusible organic substance (stearic acid) was used. The mixture was carbonized by firing, graphitized, and sieved out to adjust the average particle diameter to 21.4 µm in the same manner as in Example 1.

### Comparative Example 3

The components were melt-mixed in the same manner as in Example 1, except for using PVC that volatilized by 60% when heated to 400°C in the air and had a residual carbon content of 4.4% when heated to 800°C in an inert atmosphere as a fusible organic substance. The mixture was carbonized by firing, graphitized, and sieved out to adjust the average particle diameter to 21.2 µm in the same manner as in Example 1.

### Comparative Example 4

The components were melt-mixed in the same manner as in Example 1, except for using coal tar having a quinoline insoluble content of 10% by weight and a fixed carbon content of 55% by weight, and using a pine resin that volatilized by 57% when heated to 400°C in the air and had a residual carbon content of 3.3% when heated to 800°C in an inert atmosphere as a fusible organic substance. The mixture was carbonized by firing, graphitized, and sieved out to adjust the average particle diameter to 21.0 µm in the same manner as in Example 1.

A battery was assembled using the graphite particles thus produced as a negative electrode material. The battery characteristics were measured by the following method.

### Irreversible capacity and reversible capacity

Polyvinylidene fluoride (PVDF) dissolved in N-methyl-2-pyrrolidone was added to the graphite particles in an amount of 10 wt% (solid content). The components were mixed to obtain a graphite paste. After applying the graphite paste to rolled copper foil having a thickness of 18 µm, the graphite paste was dried and then pressed by a roll press method to a density of 1.6 g/cm³. A three-electrode test cell was formed using the electrode thus obtained as a positive electrode, a lithium electrode as a negative electrode, and a lithium electrode as a reference electrode. After constantly charging the lithium reference electrode (inserting lithium ions into graphite) up to 0.002 V, the lithium reference electrode was constantly discharged (lithium ions were extracted from graphite) up to 1.2 V. The difference between the initial amount of charging and the initial amount of discharging was determined to be the irreversible capacity. The charging/discharging process was then repeated under the same conditions. The reversible capacity per 1 g of graphite was calculated from the amount of electricity discharged (lithium ions were extracted from graphite) during the tenth cycle. The results are shown in Table 1.

**TABLE 1**

| | Example | | | Comparative Example | | | |
|---|---|---|---|---|---|---|---|
| | 1 | 2 | 3 | 1 | 2 | 3 | 4 |
| Graphite particles | | | | | | | |
| Type | Natural | Natural | Natural | Natural | Natural | Natural | Natural |
| Average particle diameter (µm) | 20.2 | 20.2 | 20.2 | 20.2 | 20.2 | 20.2 | 20.2 |
| Binder | | | | | | | |
| Type¹ | P | T | T | P | T | P | T |
| Quinoline insoluble content (%) | 0.2 | 0.2 | 0.3 | 0.2 | 10 | 0.2 | 10 |
| Fixed carbon content (%) | 52 | 55 | 52 | 52 | 55 | 52 | 55 |
| Amount (parts) | 35 | 35 | 35 | 35 | 35 | 35 | 35 |
| Fusible organic substance | | | | | | | |
| Type | Stearic acid | Stearic acid | Stearic acid | - | - | PVC | Pine resin |
| Volatile content (%) | 63 | 63 | 63 | - | - | 60 | 57 |
| Residual carbon content (%) | 0.4 | 0.4 | 0.4 | - | - | 4.4 | 3.3 |
| Amount (parts) | 5 | 5 | 5 | - | - | 5 | 5 |
| Graphite particles produced | | | | | | | |
| Average particle diameter (µm) | 20.9 | 20.9 | 20.4 | 21.3 | 21.4 | 21.2 | 21.0 |
| Specific surface area (m²/g) | 2.3 | 2.4 | 2.3 | 4.1 | 3.9 | 4.0 | 4.1 |
| Battery characteristics | | | | | | | |
| Irreversible capacity (mAh/g) | 23 | 28 | 29 | 38 | 36 | 37 | 29 |
| Reversible capacity (mAh/g) | 355 | 345 | 354 | 352 | 342 | 341 | 342 |

| | | | | | | | |
|---|---|---|---|---|---|---|---|
| ^{*1} P: Pitch, T·tar | | | | | | | |

As shown in Table 1, since the graphite particles of Examples 1 to 4 could be ground with a small amount of energy, the specific surface area decreased. As a result, the irreversible capacity could be decreased. In Comparative Examples 1 and 2, since no fusible organic substance was added, a large amount of energy was required for grinding. As a result, the irreversible capacity increased due to an increase in specific surface area. In Comparative Examples 3 and 4, the irreversible capacity increased while the reversible capacity decreased, since stearic acid was replaced with a fusible organic substance (PVC; pine resin) having a high residual carbon content.

## Claims

1. A process of producing a negative electrode material for lithium-ion secondary batteries using starting materials comprising graphite particles, pitch and a fusible organic substance, comprising
- melt-mixing graphite particles, pitch having a quinoline insoluble content of 0.3% or less by weight and a fixed carbon content of 50% or more by weight, whereby the quinoline insoluble content and the fixed carbon content are determined by the method according to JIS K2425-1983, and a fusible organic substance, wherein the organic substance is melted during melt-mixing to reduce its viscosity;
- carbonizing the mixture by firing,
- graphitizing the carbonized product, and
- grinding the graphitized product,
**characterized in that** said fusible organic substance is stearic acid.

2. The process according to claim 1, wherein the graphite particles and the pitch are mixed in such a ratio that the amount of the pitch is 25 to 40 parts by weight based on 100 parts by weight of the graphite particles.

3. The process according to claim 1, further comprising a step of obtaining a formed product from the molten mixture by placing the mixture in a mold and thermocompression forming or extruding the mixture, and then carbonizing, graphitizing and grinding the product as indicated in claim 1.

## Patentansprüche

1. Verfahren zur Herstellung eines negativen Elektrodenmaterials für Lithiumionen-Sekundärbatterien unter Verwendung von Ausgangsmaterialien, die Graphitpartikel, Pech und eine schmelzbare organische Substanz umfassen, wobei das Verfahren das
- Schmelzmischen von Graphitpartikeln, Pech mit einem Gehalt an unlöslichem Chinolin von 0,3 Gew.-% oder weniger und einem festen Gehalt an Kohlenstoff von 50 Gew.-% oder mehr, wobei der Gehalt an unlöslichem Chinolin und der feste Gehalt an Kohlenstoff durch das Verfahren gemäß JIS K2425-1983 bestimmt werden, und einer schmelzbaren organischen Substanz, wobei die organische Substanz während des Schmelzmischens geschmolzen wird, um ihre Viskosität herabzusetzen,
- das Carbonisieren der Mischung durch Glühen,
- das Graphitieren des Verkohlungsproduktes, und
- das Mahlen des Verkohlungsproduktes
umfasst,
**dadurch gekennzeichnet, dass** die schmelzbare organische Substanz Stearinsäure ist.

2. Verfahren nach Anspruch 1, bei welchem die Graphitpartikel und das Pech in einem solchen Verhältnis gemischt werden, dass die Menge des Pechs 25 bis 40 Gewichtsteile, bezogen auf 100 Gewichtsteile der Graphitpartikel, beträgt.

3. Verfahren nach Anspruch 1, des Weiteren einen Schritt umfassend, in welchem aus der geschmolzenen Mischung ein geformtes Produkt erhalten wird, indem die Mischung in eine Form gegeben und einer Thermokompressionsformung unterzogen oder extrudiert wird; danach wird das Produkt carbonisiert, graphitiert und gemahlen, wie in Anspruch 1 angegeben.

## Revendications

1. Procédé de production d'un matériau d'électrode négative pour des batteries secondaires au lithium-ion, utilisant des matériaux de départ comprenant des particules de graphite, du brai et une substance organique fusible, comprenant
- le mélange à l'état fondu des particules de graphite, d'un brai ayant une teneur en matière insoluble quinoléine de 0,3 % ou moins en poids et une teneur en carbone fixé de 50 % ou plus en poids, la teneur en matière insoluble quinoléine et la teneur en carbone fixé étant déterminées par le procédé selon la norme JIS K2425-1983, et d'une substance organique fusible, dans lequel la substance organique est fondue pendant le mélange à l'état fondu pour réduire sa viscosité ;
- la carbonisation du mélange par cuisson,
- la graphitisation du produit carbonisé, et
- le broyage du produit graphitisé,
**caractérisé en ce que** ladite substance organique fusible est l'acide stéarique.

2. Procédé selon la revendication 1, dans lequel les particules de graphite et le brai sont mélangés dans un rapport tel que la quantité de brai soit de 25 à 40 parties en poids par rapport à 100 parties en poids des particules de graphite.

3. Procédé selon la revendication 1, comprenant en outre une étape d'obtention d'un produit formé à partir du mélange fondu en plaçant le mélange dans un moule et en formant par thermocompression ou en extrudant le mélange, puis en carbonisant, en graphitisant et en broyant le produit tel qu'indiqué dans la revendication 1.
